**Europäisches Patentamt**

**European Patent Office**

**Office européen des brevets**

(19)

(11) Publication number : **0 588 599 A2**

(12) # EUROPEAN PATENT APPLICATION

(21) Application number : **93307232.4**

(22) Date of filing : **14.09.93**

(51) Int. Cl.⁵ : **G01F 1/66**

(30) Priority : **17.09.92 US 946921**

(43) Date of publication of application :
**23.03.94 Bulletin 94/12**

(84) Designated Contracting States :
**AT BE CH DE DK ES FR GB GR IE IT LI LU MC NL PT SE**

(71) Applicant : **UNITED SCIENCES, INC.**
**5310 North Pioneer Avenue**
**Gibsonia, Pennsylvania 15044 (US)**

(72) Inventor : **Traina, John E.**
**303 North Rose Drive**
**Glenshaw, Pennsylvania 15116 (US)**
Inventor : **Myers, Richard**
**105 Applewood Drive**
**Gibsonia, Pennsylvania 15044 (US)**

(74) Representative : **Marshall, John Grahame et al**
**SERJEANTS 25 The Crescent King Street**
**Leicester LE1 6RX (GB)**

(54) **Method and apparatus for ultrasonic measurements of a medium having non-axial flow.**

(57) A method and apparatus for determining flow of a fluid through a conduit utilizes two pairs of transducers. The transducers are positioned to provide a first tone burst path between one pair of transducers and a second tone burst path between the second pair of transducers which paths cross. The flow rate calculated from each pair of transducers is averaged to determine the axial flow rates of the fluid, which is also the product of the actual flow velocity and the cosine of the pitch angle. The pitch angle itself may also be calculated via this method and apparatus.

EP 0 588 599 A2

## Nature of the Invention

This invention relates to the field of ultrasonic measurements and more particularly to a method and apparatus for measuring the flow of a medium through a conduit. The invention is particularly useful for determining the flow rate of fluids whose flow is non-axial.

## Description of the Prior Art

Prior art devices have used ultrasonics in the measurement of flow in tubes or conduits. Typically a pair of transducers are mounted on opposite sides of the conduit. The transducers alternatively act as transmitters and receivers for ultrasonic tone bursts passing between them. The time period required for the tone to traverse the flowing medium is used to calculate the flow rate of the fluid. Various types of hardware and software have been developed to make this calculation.

United States Patent No. 2,959,054 to Welkowitz illustrates a conventional ultrasonic flow meter. United States Patent No. 4,630,482 to Traina discloses a method and apparatus for calculating fluid flow rate.

In recent years much concern has developed over the emission of pollutants into our atmosphere. The Environmental Protection Agency and other government regulatory agencies have established certain pollution emission standards. Recently, these standards define the mass flow of pollutant which can be emitted per unit of time. It is well known that the volume of gas emitted can be calculated by multiplying the cross-sectional area of the conduit times the flow rate of the fluid. Knowing the volume of gas that is emitted, one can measure the concentration of pollutants in a gas sample and calculate the actual mass flow of pollutant being emitted from the conduit. Many sources need to know the actual pollutant emissions either for regulatory or operational reasons. Several devices that measure pollutants, and particularly the ultrasonic device of Traina United States Patent No. 4,630,482, operate with high accuracy when the flow in the stack or duct is reasonably straight and, in particular, when the flow is axially symmetric. When the flow is non-axial, being on the average pitched toward one or the other transducer, errors in the measurement can occur. Depending upon the pitch, the flow rate determined may be higher or lower than the actual flow rate. To the extent that pollutant emissions are calculated from this flow rate, those results will similarly be in error. Thus, there is a need for an ultrasonic flow meter which can accurately measure flow of fluids which do not flow along a line parallel to the conduit.

## Summary of the Invention

An object of the invention is to provide a method of measuring flow rates of fluids having non-axial flow using the time required for an ultrasonic burst to traverse the medium. That measurement can then be used to calculate a variety of properties of the medium. The method is simple to carry out and ensures greater accuracy. Generally, we provide two paths over which ultrasonic tone bursts travel. Those paths cross at a known angle. From the time and distance of travel over those paths and the known angle, one can determine two important facts. The presence of non-axial flow will be indicated by a difference in time required for an ultrasonic tone to travel the same distance over the two crossing paths. From that time difference and the known angle, the direction of non-axial flow and the flow rate of the fluid can be calculated. The calculated flow rate can then be used to accurately determine the volume of fluid being transmitted and the actual amount of any pollutants being emitted.

Another object of the invention is to provide an apparatus to carry out the method of ultrasonic measurement. We prefer to provide two pairs of ultrasonic transducers which are alternately used as transmitters and receivers. Two transducers are mounted on each opposite side of a conduit to create crossing paths of travel for the ultrasonic tone bursts. The time taken by a tone burst to cross each path is measured in the manner described in Traina United States Patent No. 4,630,482. A check is made for the presence of non-axial flow. Then the flow rate is calculated with standard data processing hardware.

Other objects and advantages will become apparent from a description of the present preferred embodiments shown in the drawings.

## Brief Description of the Drawings

Figure 1 is a diagram illustrating a typical setup for a flow meter of the prior art on a conduit through which a medium is flowing non-axially.

Figure 2 is a diagram illustrating our method and apparatus.

Figure 3 is a perspective view of a portion of a rectangular duct with two inlets having transducers mounted thereon in accordance with the present invention.

Figure 4 is a sectional view taken along the line IV-IV of Figure 3.

## Description of the Present Preferred Embodiments Flow Velocity Measurement

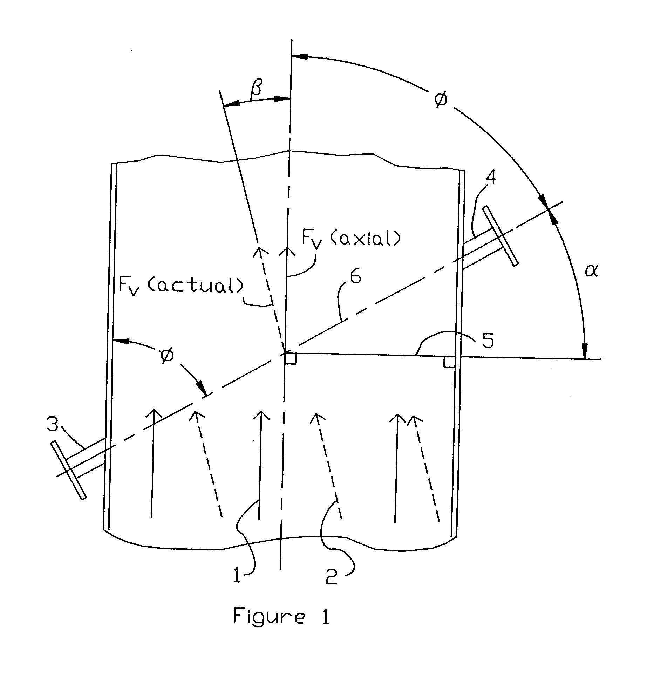

Before describing the present preferred embodiments, the basic method of flow velocity measurement and its limitations will be considered. In Figure 1 a conduit 10 has a fluid flowing therethrough. The direction of fluid flow may be parallel to the sides of the conduit indicated by arrows 1, or non-axial, indicated by dotted arrows 2. These flow paths are indicated by vectors $F_{V(actual)}$ and $F_{V(axial)}$. There is an angle $\beta$ between an axial flow path $F_{V(axial)}$ and the actual non-axial flow path $F_{V(actual)}$. $F_{V(axial)}$, which is related to $F_{V(actual)}$ by the relationship $F_{V(axial)} = [F_{V(actual)}] \cos \beta$, is the axial component of the flow which, multiplied by the cross-section of the conduit, is the actual volumetric flow. In most prior art ultrasonic flow meters two transducers 3 and 4 are used on each side of the stack or duct 10. Typically, they will be at an angle $\theta$ of 45° relative to the wall of conduit 10, although other angles may be used. One transducer 4 is downstream from the other transducer 3. There is an angle $\alpha$ between the line 5 perpendicular to the conduit wall and path 6 over which the tone bursts travel. Each transducer can be used as a sender or as a receiver. When a tone burst is transmitted from the upstream transducer 3 to the downstream receiver 4, the speed with which the sound traverses that distance is the velocity of sound plus a vector component of the flow velocity. Equation 1 below sets forth that relationship. When the tone burst is sent in the other direction, its velocity is the velocity of sound less the effect of the flow which can be calculated using Equation 2 below.

First consider the ideal case where the effect of non-axial flow is ignored (i.e., $\beta=0$). The velocity $V_1$ of a tone traveling over the path from upstream transducer 3 to downstream transducer is:

$$V_1 = C_S + F_V \cos\theta \quad (1)$$

Where:

$C_S$ = Speed of Sound
$F_V$ = Flow Speed = $F_{V(actual)}$ = $F_{V(axial)}$
$V$ = Transverse Speed of sound across the medium.
$\theta$ = Angle between axial flow direction and the tone burst path between the two transducers and the angle between transducer and the conduit wall.

The velocity $V_2$ of the tone traveling over the path from downstream transducer to upstream transducer is:

$$V_2 = C_S - F_V \cos\theta \quad (2)$$

If Equation (2) is subtracted from Equation (1) we get:

$$(V_1 - V_2) = 2(\cos\theta)F_V \text{ so that } F_V = (V_1 - V_2) \div (2\cos\theta) \quad (3)$$

Velocity = distance/time or V = L/t

Since the distance L is the same whether the tone travels upstream or downstream, $V_1 = \dfrac{L}{t_1}$ and $V_2 = \dfrac{L}{t_2}$

$$F_V = \frac{1}{2\cos\theta} \left[ \frac{L}{t_1} - \frac{L}{t_2} \right] \qquad (4)$$

Rearranging:

$$F_V = \frac{L}{2\cos\theta} \left[ \frac{t_2 - t_1}{t_1 \, t_2} \right] \qquad (5)$$

where $t_1$ is the time required for the sonic pulse to travel from the upstream transducer[3] to the downstream transducer[4] and $t_2$ is the time required for the sonic pulse to travel from the downstream transducer[4] the upstream transducer[3].

## Pitch-Angle Interference

When the flow is not perfectly axial ("axial" meaning parallel to the sides of the stack or duct) having a pitch angle $\beta$, the calculated flow velocity will be in error by the ratio $\cos\theta/\cos(\theta+\beta)$. Table I shows the errors that will result from three common flow pitch angles for the two cases of $\theta=45°$ which we recommend and $\theta=78.2°$ (as has been recommended by others in the industry).

TABLE I

| Flow Pitch Angle β (degrees) | Transducers at 45° with respect to flow | Transducers at 78.2° with respect to flow |
| --- | --- | --- |
| 1° | 2% error | 9% error |
| 2° | 4% error | 20% error |
| 4° | 8% error | 51% error |

Pitch angles of up to 7° have been observed at a utility test site, at a stack elevation corresponding to nearly 10 stack diameters up from the inlet ductwork. Furthermore, at many installations these effects cannot be correlated with process load and calibrated out because the pitch was rising from the intersection of different inlet ducts feeding a common stack. It is therefore desirable to minimize or eliminate these potential effects.

Minimizing of Non-axial Flow Effects

As was illustrated in Figure 1 and the accompanying mathematics, flow which is "pitched" toward the downstream transducer will cause the flow-monitor to read high. This occurs because the flow, in this case, creates a larger differential in the transmit-times of ultrasonic bursts than would be the case if the flow were parallel to the walls. Similarly, flow which is "pitched" away from the downstream transducer will cause a smaller transmit-time differential than it ought and the system will correspondingly read low.

There are three possible specific remedies for this effect. The first is to mount the transducers so as to minimize the angle θ between the line of sight between the transducers and the axial flow direction (25° to 45° are practical angles). The second remedy is to orient the line of sight of the transducers perpendicular to any expected flow pitch. The third remedy is to use the present method and apparatus described and claimed here. The first and second remedies will not be practical where flow direction may change or be impossible to calculate or measure. Those choices also are not suitable where physical obstructions may make site-specific calibrations difficult. If the system is being fed by independent multiple sources (multiple ducts into a stack or multiple ducts blending into a common duct), then the flow patterns can never be counted on to be consistent with total load. Hence, the first two possibilities are not useful in multiple input ducts or conduits.

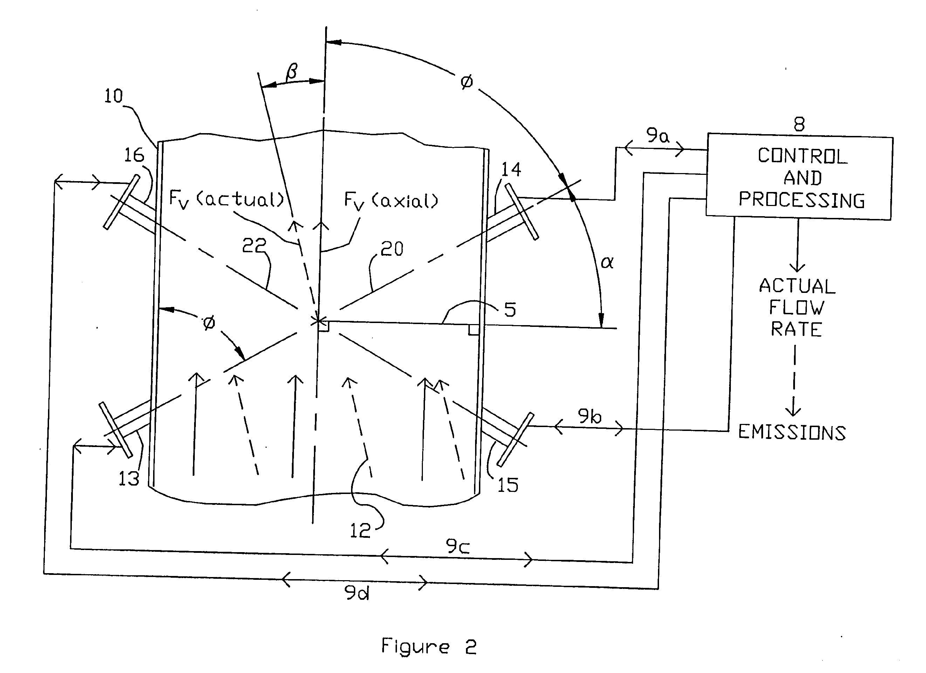

In Figure 2 we show a present preferred apparatus for practicing our method. A fluid indicated by arrows 12 is flowing in conduit 10. On conduit 10 we mount four transducers 13, 14, 15 and 16. The transducers are driven by control means 8 which include transducer drivers, timing circuits, memory and signal processors which directs and receives signals from the transducers through lines 9a, 9b, 9c and 9d. The control means also processes the signals from the transducers to determine the Actual Flow Rate of the fluid passing through the conduit 10. If desired it may use that flow rate to calculate emissions of pollutants. Transducers 13 and 14 alternatively serve as transmitters and receivers for tone bursts traveling along path 20. Transducer pairs 15 and 16 act as transmitters and receivers for tone bursts crossing path 22. Thus, paths 20 and 22 are each at a nominal angle θ from the vertical flow indicated by vector $F_{Vn}$. There is an angle β between the axial flow $F_{V(axial)}$ and the actual flow $F_{V(actual)}$. Suitable control hardware indicated by box 8 and associated software are known in the industry. One type of system is described in United States Patent No. 4,630,482. The software conventionally used with such equipment can also be used with the present invention. However, some modification should be done to enable the software to solve the equations set forth herein.

Recall from the earlier discussion of Figure 1 that non-axial or pitched flow that is directed toward downstream transducer 16 will enhance the transit time and cause the system to read high by the ratio $Cos(\theta-\beta)/Cos\theta$, so that:

$$F_{V2 \text{ (measured)}} = F_{V(actual)}[Cos(\theta-\beta)/Cos\theta]$$

$$= \text{velocity measured by transducers 15 and 16}$$

Similarly, pitched flow that is turned away from the downstream transducer 16 will not contribute to the transmit-time differential as much as it should, and will thereby cause the system of transducers 15 and 16 to read low by the ratio $Cos(\theta-\beta)Cos\theta$; that is

$$F_{V1 \text{ (measured)}} = F_{V(actual)}[Cos(\theta + \beta)/Cos\theta]$$

4

It is straightforward to show that if we take the average of $F_{V1\ (measured)}$ and $F_{V2\ (measured)}$ and apply a few trigonometric identities, the result will be:

$$[F_{V1(measured)} + F_{V2(measured)}] \div 2 = F_{V(actual)}Cos\beta = F_{V\ (axial)}$$

Therefore:

$$FV_{axial} = \frac{V_{1(measured)} + V_{2(measured)}}{2}$$

which is precisely the axial component of flow through the conduit needed to calculate volumetric flow and emissions of pollutants.

It is thereby clear that if two sets of transducers are mounted in a crossed X-pattern as shown in Figure 2, with the plane of the "X" parallel to the nominal flow direction, the average of the two measured velocities will be exactly the axial component of the non-axial flow vector corresponding to the actual flow of the fluid.

It is also possible to use the measured ultrasonic transit times from the two sets of transducers to calculate the pitch angle $\beta$ in the plane defined by the transducers. This can be shown, via use of the earlier equations and the use of trigonometric identities, to be

$$\beta = arc\ tan \left[ (cot\ \theta) \frac{(t_1^{-1} - t_2^{-1}) - (t_3^{-1} - t_4^{-1})}{(t_1^{-1} - t_1^{-1}) + (t_3^{-1} - t_4^{-1})} \right]$$

where:

$t_1$ is the sonic transit time from transducer 16 to transducer 15
$t_2$ is the sonic transit time from transducer 15 to transducer 16
$t_3$ is the sonic transit time from transducer 14 to transducer 13
$t_4$ is the sonic transit time from transducer 13 to transducer 14.

It is important to note that in most cases pairs of transducers can be separately used. These pairs or monitors will often meet certification requirements independently. Hence if only axial flow is present one transducer pair could be used and the second monitor will serve as a backup even though the configuration is designed to use the average of both monitors.

In Figure 2 we show two pairs of transducers. However, it may be possible to perform our method using one pair of transducers. First the transducers would be positioned as transducers 13 and 14 and there measure flow. Then they would be moved to the positions of transducers 15 and 16 where they would perform similar functions. For most situations, however, moving transducers in this manner is impractical.

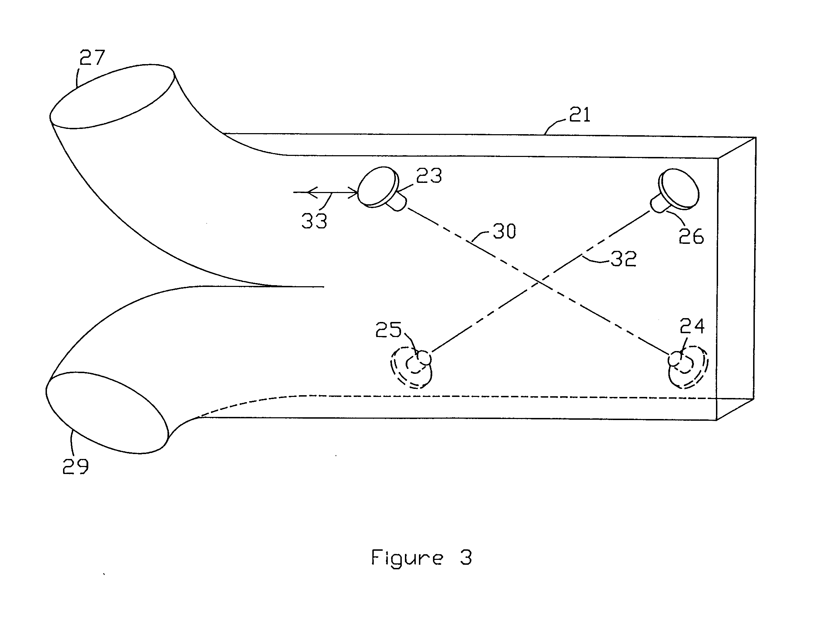

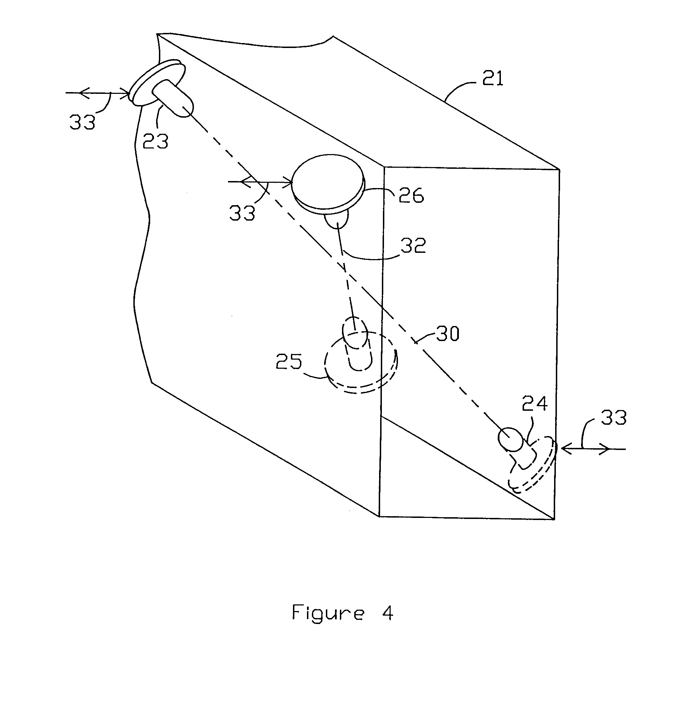

The unit diagramed in Figure 2 can be installed corner to corner in a square duct with multiple inlets, allowing one to effectively average the vertical and horizontal profile as well as eliminate problems with flow pitch effects. Figures 3 and 4 show two views of a rectangular duct 21 on which our apparatus has been mounted. Duct 21 has inlets 27 and 29. Transducers 23, 24, 25 and 26 are positioned to provide a configuration of the crossed X-pattern for tone burst paths 30 and 32. These transducers receive input from and output signals to control and signal processing hardware (not shown) over line indicated by arrow 33. The embodiment of Figures 3 and 4 might be used when both stratification and flow pitch are expected and cannot be correlated with total load. This arrangement will average the profile side-to-side and top-to-bottom, as well as averaging out the effects of any non-axial component of the flow.

## Claims

1.  A method of ultrasonic measurement of flow of a fluid through a conduit based upon time taken by ultrasonic tone bursts to traverse the fluid comprising the steps of:

    a) placing a first transducer on the conduit, said first transducer capable of serving as a transmitter and receiver of an ultrasonic tone burst traveling along a first tone burst path through the fluid;

    b) placing a second transducer on the conduit at a distance from the first transducer, the second transducer being capable of emitting and receiving ultrasonic signals traveling along the first tone burst path, the first transducer and second transducer being positioned so that a line drawn between them extends across a conduit through which a fluid is flowing and defines a first tone burst path;

    c) determining a time $t_1$ required by at least one tone burst to travel from the first transducer to the second transducer and a time $t_2$ required by at least one tone burst to travel from the the second transducer to the first transducer, all traveling over the first tone burst path;

d) placing a third transducer on the conduit, said third transducer capable of serving as a transmitter and receiver of an ultrasonic tone burst traveling along a second tone burst path through the fluid;

e) placing a fourth transducer at a distance from the third transducer, the fourth transducer being capable of emitting and receiving ultrasonic signals traveling along the second tone burst path, the third transducer and fourth transducer being positioned so that a line drawn between them extends across a conduit through which a fluid is flowing and defines a second tone burst path which intersects the first tone burst path;

f) determining a time $t_3$ required by at least one tone burst to travel from the third transducer to the fourth transducer and a time $t_4$ required by a tone burst to travel from the fourth transducer to the third transducer all traveling over the second tone burst path; and

g) utilizing at least one pair of times $t_1$ and $t_2$ and times $t_3$ and $t_4$ to calculate a flow rate of the fluid.

2. The method of claim 1 also comprising the steps of:

a) comparing $(t_1 - t_2)$ and $(t_3 - t_4)$ to determine if $(t_1 - t_2) = (t_3 - t_4)$; and

b) if $(t_1 - t_2) = (t_3 - t_4)$ utilizing either $t_1$ and $t_2$ or $t_3$ and $t_4$ to calculate the flow of the fluid.

3. The method of claim 1 also comprising the steps of:

a) comparing $(t_1 - t_2)$ and $(t_3 - t_4)$ to determine if $(t_1 - t_2) = (t_3 - t_4)$; and

b) if $(t_1 - t_2) \neq (t_3 - t_4)$ utilizing $(t_1 - t_2)$ and $(t_3 - t_4)$ to calculate the flow of the fluid.

4. The method of claim 1 wherein $(t_1 - t_2) \neq (t_3 - t_4)$ and axial flow of the fluid $F_V$ is calculated by solving the following equation:

$$F_V \cos \beta = \frac{V_1 + V_2}{2}$$

where

$V_1$ = velocity of the fluid calculated from tone bursts traveling over the first tone burst path;

$V_2$ = velocity of the fluid calculated from tone bursts traveling over the second tone burst path; and

$\beta$ = pitch angle between axial flow and an actual flow direction of the fluid.

5. The method of claim 4 wherein $(t_1 - t_2) \neq (t_3 - t_4)$, the first tone burst path and the second tone burst path have a same length L and the flows $V_1$ and $V_2$ are calculated by solving the equations:

$$V_1 = \frac{L}{2\cos\theta} \left[ \frac{t_2 - t_1}{t_1 \, t_2} \right]$$

$$V_2 = \frac{L}{2\cos\theta} \left[ \frac{t_4 - t_3}{t_3 \, t_4} \right]$$

where $\theta$ is an angle between a nominal axial flow direction and either tone burst path.

6. The method of claim 5 where the angle $\beta$ of the nonaxial flow is calculated by solving the equation:

$$\beta = \text{arc tan} \left[ (\cot \theta) \frac{(t_1^{-1} - t_2^{-1}) - (t_3^{-1} - t_4^{-1})}{(t_1^{-1} - t_1^{-1}) + (t_3^{-1} - t_4^{-1})} \right]$$

7. An apparatus for determining flow of a medium through a conduit comprising:

a) a first pair of transducers attached to the conduit in a manner to define a first tone burst path between the transducers in the first pair;

b) a second pair of transducers attached to the conduit positioned to define a second tone burst path between the transducers of said second pair, the second path crossing the first tone burst path; and

c) means for determining a velocity $V_1$ from times $t_1$ and $t_2$ required by a tone burst to travel opposite directions across the first tone burst path and a velocity $V_2$ from times $t_3$ and $t_4$ required for a tone burst to travel opposite directions across the second tone burst path; and

d) means for calculating flow of a fluid passing through the conduit from at least one of $V_1$ and $V_2$.

8. The apparatus of claim 7 wherein the transducers are mounted at an angle of 45° relative to a wall of the conduit.

Figure 1

8 CONTROL AND PROCESSING

ACTUAL FLOW RATE

EMISSIONS

9a

9b

α

φ

14

5

15

$F_v$ (axial)

20

$F_v$ (actual)

22

β

φ

10

16

13

12

9c

9d

Figure 2

Figure 3

EP 0 588 599 A2

Figure 4